# FASCICULE DE BREVET EUROPEEN

(11) **EP 2 595 792 B1**
(45) Date de publication et mention de la délivrance du brevet: **19.03.2014**
(21) Numéro de dépôt: 11730685.2
(22) Date de dépôt: 12.07.2011
(51) Int. Cl.: B29C 49/46, B29C 49/58

(54) **PROCÉDÉ DE FORMAGE D'UN RÉCIPIENT PAR SOUFFLAGE ET REMPLISSAGE**
VEFAHREN ZUR HERSTELLUNG EINES BEHÄLTERS MITTES BLASEN UND BEFÜLLEN
METHOD OF FORMING A CONTAINER BY BLOWING AND FILLING

(30) Priorité: 20.07.2010 FR 1055882
(43) Date de publication de la demande: 29.05.2013
(73) Titulaire: Sidel Participations, 76930 Octeville sur Mer (FR)
(72) Inventeur: FEVRE, Sébastien, F-76930 Octeville sur Mer (FR); FEUILLOLEY, Guy, F-76930 Octeville sur Mer (FR)
(74) Mandataire: Gevers France
(86) Numéro de dépôt international: PCT/EP2011/061830
(87) Numéro de publication internationale: WO 2012/010460

(56) Documents cités:
- WO-A1-02/02295
- WO-A1-99/50047
- WO-A1-2006/096916

## Description

La présente invention se rapporte à un procédé de formage d'un récipient en matériau thermoplastique comportant une étape d'expansion partielle au moyen d'un gaz et une étape de prise d'empreinte au moyen d'un liquide.

La présente invention se rapporte plus particulièrement à un procédé de formage d'un récipient en matériau thermoplastique préalablement conditionné thermiquement depuis un état d'ébauche jusqu'à un état final, le récipient étant inséré dans une cavité délimitée par une empreinte, le procédé comportant :
- une première étape d'expansion partielle au cours de laquelle le récipient est rempli d'un gaz de soufflage sous pression de manière à souffler le récipient jusqu'à un état intermédiaire entre son état d'ébauche et son état final ;
- une deuxième étape de remplissage du récipient au cours de laquelle le récipient est rempli avec un liquide de remplissage qui chasse le gaz de soufflage à travers un orifice de sortie du récipient ;
- une troisième étape de prise d'empreinte au cours de laquelle le contenu du récipient est mis sous une pression suffisante pour plaquer fortement les parois du récipient contre l'empreinte du moule afin de conformer le récipient dans son état final.

La fabrication de récipients en matière thermoplastique, tels que des bouteilles, flacons, etc. est effectuée par le formage de récipients à l'état d'ébauche, qui sont parfois appelés préformes.

Préalablement à la mise en oeuvre du procédé de formage, les préformes sont chauffées dans un four de conditionnement thermique de manière à leur conférer une structure suffisamment malléable pour le procédé de formage.

Ces préformes sont ensuite introduites dans un dispositif de moulage auquel sont généralement associés des moyens de soufflage ou d'étirage-soufflage.

A l'issu du procédé de formage, une étape de remplissage est mise en oeuvre. Au cours de cette étape de remplissage, le récipient à l'état final est généralement rempli d'un liquide qui est destiné à être commercialisé ou transporté dans le récipient.

Un tel procédé est connu du document WO 2006/096916 A1 ou du document WO 02/02295 A1.

Le document EP-A-2.143.544 a proposé de modifier le procédé de formage en utilisant un liquide pour finaliser la mise en forme du récipient. Le procédé selon cet état de la technique comporte ainsi une première étape d'expansion partielle du récipient depuis son état d'ébauche jusqu'à un état intermédiaire par soufflage d'un gaz de soufflage à basse pression, puis une deuxième étape de remplissage du récipient dans ledit état intermédiaire avec un liquide de remplissage, et enfin, une troisième étape de prise d'empreinte au cours de laquelle le liquide contenu dans le récipient est mis sous une haute pression afin de conférer sa forme finale au récipient.

Le liquide de remplissage est généralement incompressible par rapport à un gaz. Ceci permet donc une montée en pression efficace et rapide.

Avantageusement, le liquide utilisé lors de la troisième étape de prise d'empreinte est le liquide qui est destiné à être transporté dans le récipient à l'état final. Un tel procédé permet ainsi de remplir le récipient avec le liquide pendant le procédé de formage. Ceci permet notamment de gagner du temps en évitant de rajouter une opération de remplissage après le procédé de formage.

La présente invention a pour but d'améliorer un tel procédé de formage de manière à le rendre plus rapide et plus performant, et de manière à produire des récipients finaux de meilleure qualité.

A cet effet, l'invention propose un procédé de formage du type décrit précédemment, caractérisé en ce qu'au cours de la deuxième étape de remplissage, le rapport entre le débit entrant de liquide de remplissage et le débit sortant de gaz de soufflage est maîtrisé de manière que la pression globale à l'intérieur du récipient soit suffisante pour permettre la poursuite de l'expansion du récipient durant cette deuxième étape.

Selon d'autres caractéristiques de l'invention :
- la pression globale à l'intérieur du récipient durant la deuxième étape de remplissage est constante ;
- la pression globale à l'intérieur du récipient durant la deuxième étape de remplissage est variable avec le temps ;
- la pression globale à l'intérieur du récipient durant la deuxième étape de remplissage est constamment croissante avec le temps ;
- la pression globale à l'intérieur du récipient durant le deuxième étape de remplissage est pilotée en agissant sur le débit de liquide de remplissage entrant ;
- la pression globale à l'intérieur du récipient durant la deuxième étape de remplissage est pilotée en agissant sur le débit de gaz de soufflage sortant.

D'autres caractéristiques et avantages de l'invention apparaîtront au cours de la lecture de la description détaillée qui va suivre pour la compréhension de laquelle on se reportera aux dessins annexés parmi lesquels :
- la figure 1 est une vue en perspective en coupe axiale qui représente un dispositif de formage pour la mise en oeuvre du procédé de formage réalisé selon les enseignements de l'invention ;
- les figures 2 à 7 sont des vues similaires à celles de la figure 1 qui représentent le dispositif de formage au cours de la mise en oeuvre du procédé de formage.

Pour la suite de la description, on adoptera à titre non limitatif une orientation verticale dirigée de bas en haut indiquée par la flèche "V" des figures, et une orientation radiale dirigée orthogonalement depuis l'axe du récipient vers l'extérieur. Le sens d'écoulement des fluides sera dirigé depuis l'amont vers l'aval.

Pour la suite de la description, des éléments présentant des fonctions analogues, identiques ou similaires seront désignés par des mêmes numéros de référence.

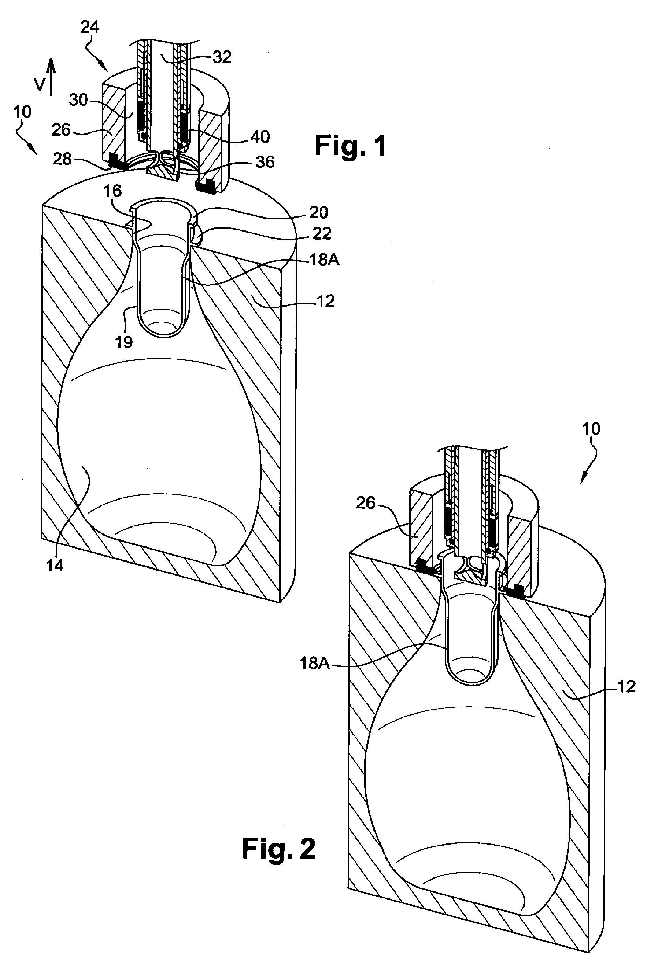

On a représenté à la figure 1 un dispositif 10 de formage qui est apte à mettre en oeuvre un procédé réalisé selon les enseignements de l'invention.

Le dispositif 10 de formage comporte un moule 12 qui est généralement réalisé en plusieurs parties qui peuvent être séparées pour introduire et/ou extraire le récipient avant et après son formage. Pour des raisons de clarté, une seule partie du moule 12 est représentée aux figures.

Par la suite, lorsqu'on fera référence au moule 12 sans autre précision, on comprendra que le moule 12 est dans sa position assemblée.

Le moule 12 est ici réalisé en deux parties séparables radialement l'une de l'autre. Chaque partie comporte une demi-empreinte concave du récipient final à obtenir (fonds parois, épaule). Ainsi, lorsque les deux parties sont assemblées pour former le moule 12, les deux demi-empreintes forment une cavité 14 délimitée par une empreinte de la forme finale du récipient à l'état final.

En variante, les moules comportent trois parties : une partie avec l'empreinte du fond de récipient et deux parties pour constituer les parois et l'épaule du récipient.

La cavité 14 est ouverte verticalement vers le haut par l'intermédiaire d'un orifice 16 supérieur.

Le moule 12 est destiné à loger un récipient 18 en matériau thermoplastique. Un tel récipient 18 à l'état d'ébauche est généralement appelé préforme. Le récipient 18 à l'état d'ébauche est préalablement conditionné thermiquement afin de rendre le matériau thermoplastique suffisamment malléable pour que le récipient 18 puisse être soufflé, ou mis en expansion, pour former un récipient à l'état final.

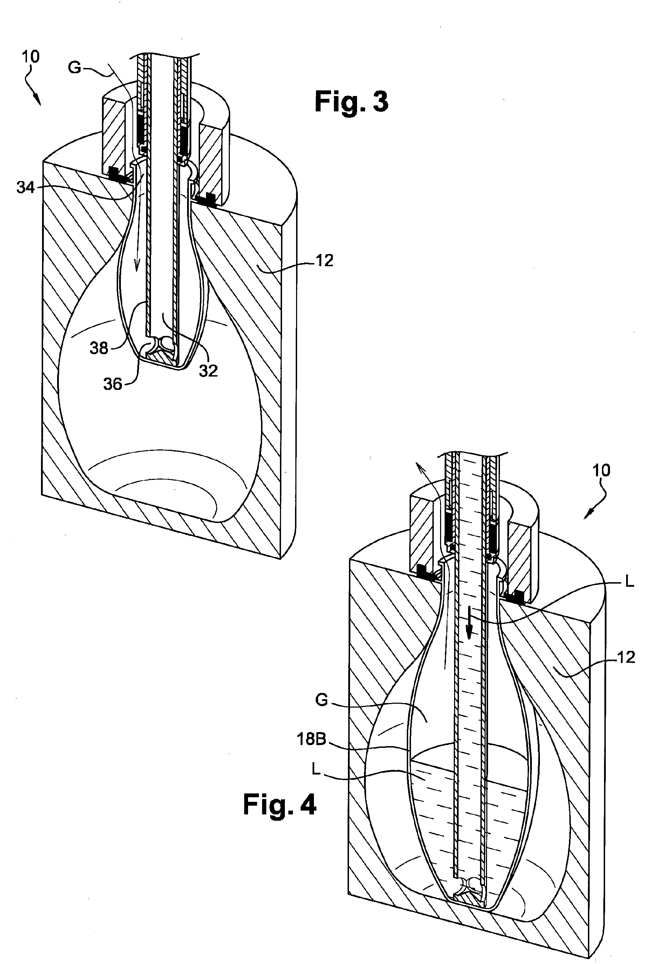

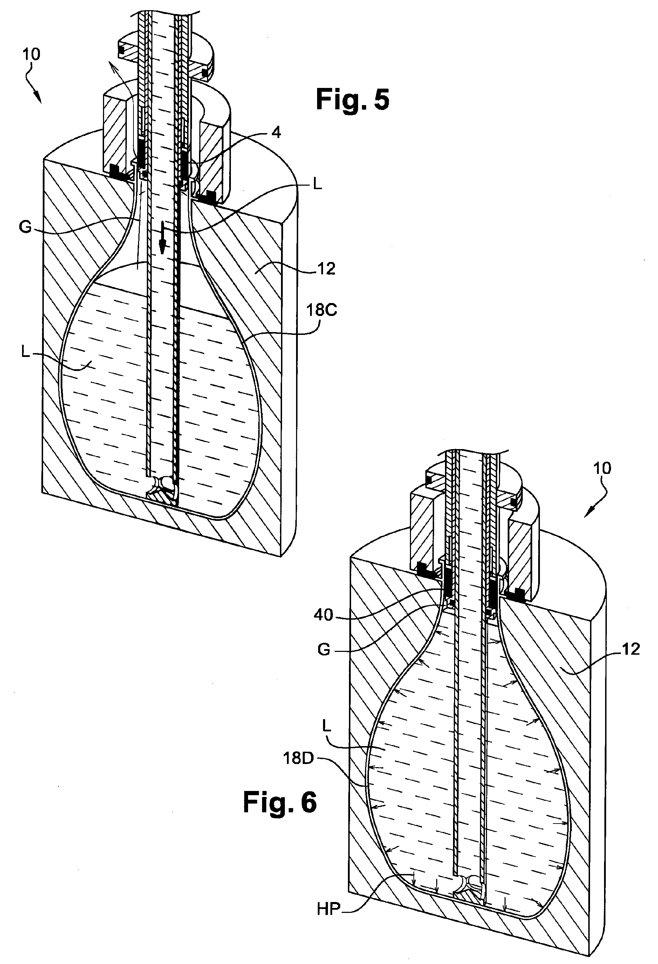

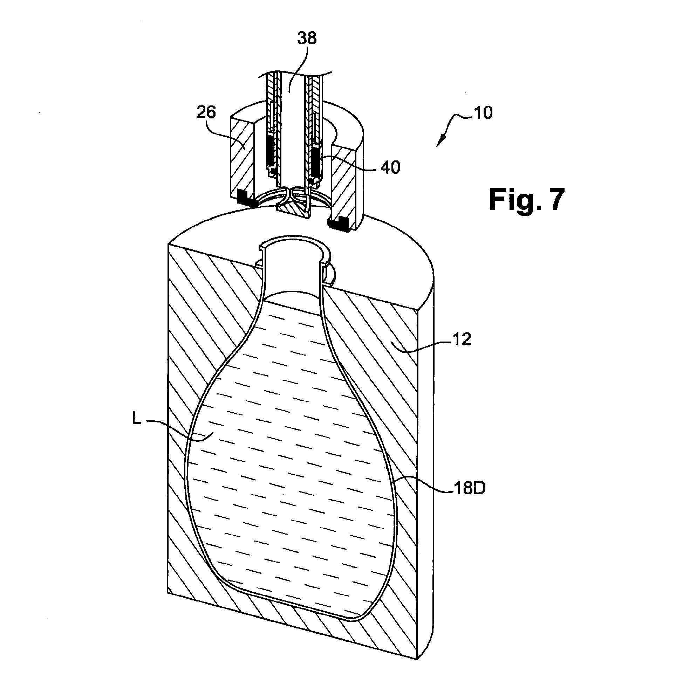

Pour la suite de la description, lorsqu'il sera nécessaire de préciser l'état du récipient 18, le récipient 18 à l'état d'ébauche sera désigné par le numéro de référence "18A", le récipient 18 à l'état final sera désigné par le numéro de référence "18D", comme cela est représenté à la figure 7. Comme cela sera expliqué par la suite, le récipient 18 est aussi susceptible d'être un premier état intermédiaire qui sera désigné par le numéro de référence "18B" comme cela est représenté figure 4 et dans un deuxième état intermédiaire qui sera désigné par le numéro de référence "18C", comme cela est représenté figure 5.

Le récipient 18 comporte généralement un corps 19 creux qui est ouvert vers le haut par l'intermédiaire d'un orifice délimité radialement par un col 20, encore appelé goulot.

De manière connue, le col 20 du récipient 18 présente généralement déjà sa forme définitive lorsque le récipient 18 est à l'état d'ébauche 18A. Les dimensions du col 20 ne doivent donc pas être modifiées lors du procédé de formage. A cet effet, seul le corps 19 du récipient 18 à l'état d'ébauche 18A est logé dans la cavité 14 du moule 12, le col 20 s'étendant à l'extérieur de la cavité 14 en sortant par l'orifice 16 supérieur pour éviter toute déformation fortuite.

Le corps 19 du récipient 18 est séparé du col 20 par l'intermédiaire d'une collerette 22 qui s'étend radialement en saillie vers l'extérieur. La collerette 22 retient ici le col 20 à l'extérieur de la cavité 14 du moule 12 en reposant sur une face supérieure du moule 12.

Le dispositif 10 de formage comporte une tuyère 24 qui est constituée d'un tube vertical qui est agencé verticalement au-dessus de l'orifice 16 supérieur du moule 12. La tuyère 24 comporte une ouverture d'extrémité inférieure formant un nez 26. Seul l'extrémité inférieure de la tuyère 24 a été représentée aux figures.

La tuyère 24 est généralement coulissante verticalement entre une position haute inactive qui est représentée à la figure 1 , et une position basse active qui est représentée aux figures suivantes.

La tuyère 24 forme une conduite pneumatique qui est susceptible d'être alimentée en gaz de soufflage sous pression.

Le nez 26 est conçu pour que, en position basse active, le tube de la tuyère 24 soit raccordé de manière étanche avec l'intérieur du récipient 18 à l'état d'ébauche 18A. Ainsi, le récipient 18 est susceptible d'être rempli de gaz de soufflage sous pression entrant par le col 20 afin de souffler le récipient 18 comme cela sera détaillé par la suite.

Dans l'exemple représenté aux figures, il s'agit d'une tuyère 24 du type "cloche" dans laquelle le nez 26 de la tuyère 24 présente la forme d'une cloche qui recouvre le col 20 lorsque la tuyère 24 est dans sa position basse active. Le bord d'extrémité inférieur du nez 26 est alors équipé d'un joint 28 d'étanchéité qui est serré verticalement vers le bas contre la face supérieure du moule 12 ou contre la collerette 22 du col 20.

Pour des raisons de clarté, le nez 26 est représenté en coupe axiale aux figures. On comprendra que le nez 26 présente une forme cylindrique de manière à entourer totalement le col 20.

La tuyère 24 du dispositif 10 de formage est équipée d'au moins une conduite 32 hydraulique qui est distincte de la tuyère 24. Ainsi, le gaz de soufflage et le liquide de remplissage susceptibles d'alimenter le récipient 18 ne sont pas amenés par une conduite commune.

Etant donné la forme cylindrique du col 20, il est avantageux de réaliser la conduite 32 hydraulique de manière concentrique avec la tuyère 24.

Dans le mode de réalisation représenté aux figures, comme cela sera décrit par la suite, le gaz de soufflage sera injecté dans le récipient 18 par le col 20. De même, l'échappement dudit gaz de soufflage lors du remplissage avec le liquide aura lieu par le col 20. En effet, étant donné que la densité du gaz de soufflage est généralement inférieure à la densité du liquide de remplissage, il est préférable de réaliser l'échappement du gaz de soufflage dans une partie supérieure du récipient 18.

Selon une variante non représentée de l'invention, le dispositif 10 de formage comporte un orifice d'injection qui est destiné uniquement à l'introduction du gaz de soufflage et un orifice d'échappement qui est destiné uniquement à l'évacuation du gaz de soufflage. Dans ce cas, l'orifice d'échappement est préférablement formé par le col 20 du récipient 18. L'orifice d'injection peut être agencé indifféremment à l'intérieur du récipient 18 ou au niveau du col 20.

La conduite 32 hydraulique débouche dans le récipient 18 par l'intermédiaire d'un orifice 36 de remplissage.

Dans l'exemple représenté aux figures, la conduite 32 hydraulique est formée à l'intérieur d'une tige 38 creuse verticale qui est monté concentrique à l'intérieur de la tuyère 24. L'extrémité inférieure de la tige 38 comporte au moins un orifice 36 de remplissage.

La tige 38 est susceptible de coulisser indépendamment de la tuyère 24 entre une position haute de repos dans laquelle l'extrémité inférieure de la tige 38 est située à l'extérieur du récipient 18 et une position basse dans laquelle l'extrémité inférieure de la tige 38 est agencée à l'intérieur du récipient 18, ici à proximité du fond du récipient 18.

En variante, l'orifice de remplissage est agencé au niveau du col 20.

La tige 38 présente un diamètre inférieur au diamètre intérieur du col 20. Ainsi, lorsque la tige 38 occupe sa position basse, le passage du gaz de soufflage dans le récipient 18 est réalisé par un orifice pneumatique présentant une forme annulaire qui est délimitée radialement vers l'extérieur par le col 20 et radialement vers l'intérieur par la tige 38.

De manière non limitative, le dispositif 10 de formage comporte aussi des moyens d'étirage du récipient 18. Les moyens d'étirage sont avantageusement réalisés par la tige 38. Au cours de sa descente vers une position basse extrême, la tige 38 est ainsi susceptible de pousser le fond du récipient 18 à l'état d'ébauche 18A pour provoquer son élongation dans un sens vertical vers le bas.

Le dispositif 10 comporte en outre des moyens commandés pour boucher de manière étanche l'orifice 34 pneumatique afin que le récipient 18 soit raccordé de manière étanche uniquement avec l'orifice 36 de remplissage.

Les moyens de bouchage sont ici formé par un bouchon 40 annulaire qui entoure la tige 38 et qui est monté coulissant verticalement à l'intérieur de la tuyère 24 entre une position haute d'attente dans laquelle il est agencé à distance au droit de l'orifice 34 pneumatique et une position basse de bouchage dans laquelle le bouchon 40 obture l'orifice 34 pneumatique. Le bouchon 40 comporte ici un joint annulaire qui est susceptible d'être serré radialement entre le col 20 et la tige 38 lorsqu'il est en position basse de bouchage.

Le procédé de formage mis en oeuvre par le dispositif 10 de formage comporte principalement trois étapes successives qui seront désignées "E1", "E2", et "E3".

La première étape "E1" du procédé de formage débute après qu'un récipient 18 à l'état d'ébauche 18A préalablement conditionné thermiquement ait été agencé dans la cavité 14 du moule 12, comme représenté à la figure 1. Les deux parties du moule 12 sont alors fermées de manière à former la cavité 14. La tuyère 24, la tige 38 et le bouchon 40 occupent chacun leur position haute.

Lors d'une première étape "E1" d'expansion partielle, le récipient 18 est rempli d'un gaz de soufflage sous une basse pression "BP" de manière à provoquer l'expansion du récipient 18 jusqu'à un premier état intermédiaire 18B entre son état d'ébauche 18A et son état final 18D. A cet effet, comme représenté à la figure 2, la tuyère 24 est commandée vers sa position basse active, tandis que la tige 38 et le bouchon 40 demeurent respectivement dans leur position haute.

Comme représenté à la figure 3, du gaz de soufflage "G", tel que de l'air, est injecté à basse pression "BP" à l'intérieur du récipient 18 par l'intermédiaire de la tuyère 24. La pression du gaz injecté est par exemple comprise entre 4 et 10 bars. Sous l'effet de la pression "BP" du gaz de soufflage "G" qui s'exerce sur ses parois, le récipient 18 à l'état d'ébauche 18A commence à gonfler. Cette opération sera par la suite appelée opération de soufflage.

Lors de cette première étape "E1 ", la tige 38 peut aussi être commandée de manière à descendre vers sa position extrême basse de manière à pousser le fond du récipient 18 à l'état d'ébauche 18A vers le fond de la cavité 14. Ceci permet d'étirer le récipient 18 axialement vers le bas. Cette opération est connue sous la dénomination "opération d'étirage".

Lors de cette première étape "E1 ", l'orifice 36 de remplissage n'est pas alimenté en liquide de remplissage.

L'opération d'étirage peut commencer avant, après ou simultanément à l'opération de soufflage en fonction de plusieurs paramètres connus de l'homme du métier afin de modifier la répartition d'épaisseur de matière sur le récipient.

Puis, lorsque le récipient 18 atteint un premier état intermédiaire 18B entre son état d'ébauche 18A et son état final 18D, comme illustré à la figure 4, une deuxième étape "E2" de remplissage du récipient 18 est enclenchée.

Au cours de cette deuxième étape "E2", le récipient 18 est rempli avec le liquide "L" de remplissage, comme cela est représenté à la figure 4. Le liquide "L" de remplissage est amené sous une pression supérieure à la pression du gaz de soufflage "G" contenu dans le récipient 18, par l'intermédiaire des orifices 36 situés à l'extrémité inférieure de la tige 38. A cet effet, l'extrémité inférieure de la tige 38 est agencée à l'intérieur du récipient 18 pendant la deuxième étape "E2".

Lors de cette deuxième étape "E2", l'opération d'étirage peut être poursuivie ou interrompue.

Dans l'exemple représenté aux figures 4, 5 et 6, la tige 38 demeure ici dans sa position basse extrême durant la fin du procédé de formage.

Au fur et à mesure que le liquide "L" de remplissage remplit le récipient 18, le gaz de soufflage "G" est chassé à travers le col 20 formant à présent un orifice de sortie du gaz de soufflage "G". A cet effet, l'alimentation en gaz de soufflage "G" par la tuyère 24 est arrêtée.

Le rapport entre le débit entrant de liquide "L" de remplissage et le débit sortant de gaz de soufflage "G" est maîtrisé de manière que la pression globale à l'intérieur du récipient 18 soit suffisante pour permettre la poursuite de l'expansion du récipient 18 durant cette deuxième étape "E2" jusqu'à un deuxième état intermédiaire 18C entre le premier état intermédiaire 18B et l'état final 18D, comme représenté à la figure 5.

La pression globale à l'intérieur du récipient 18 durant la deuxième étape "E2" de remplissage est de préférence variable avec le temps. La pression globale à l'intérieur du récipient 18 durant la deuxième étape "E2" de remplissage est par exemple constamment croissante avec le temps de manière à provoquer un gonflage continu du récipient 18.

La pression est ainsi augmentée régulièrement jusqu'à atteindre une pression maximale de dégazage "BPmax", par exemple de 10 bars.

Selon une variante non représentée de l'invention, la pression globale à l'intérieur du récipient durant la deuxième étape de remplissage est constante.

Pour obtenir une maîtrise du rapport entre le débit de remplissage et le débit de gaz de soufflage "G" sortant, il est possible d'agir :
- sur le débit entrant de liquide "L" de remplissage ; et/ou
- sur le débit sortant de gaz de soufflage "G".

Selon un premier mode de réalisation de l'invention, au début de la deuxième étape "E2", l'arrivée de gaz de soufflage "G" dans la tuyère 24 est fermée. La pression de gaz de soufflage "G" contenu dans la tuyère 24 est alors en équilibre avec la pression de gaz de soufflage "G" compris dans le récipient 18.

La tuyère 24 est raccordée à une soupape d'échappement (non représenté) par l'intermédiaire d'une vanne (non représentée) qui est ouverte durant la deuxième étape "E2". La soupape forme l'unique sortie pour le gaz de soufflage "G" depuis la tuyère 24.

Cette soupape est tarée de manière à s'ouvrir lorsque la pression de gaz de soufflage "G" dans la tuyère 24 atteint la pression maximale de dégazage "BPmax".

Ainsi, lorsque le récipient 18 est rempli de liquide "L" de remplissage, l'air de soufflage contenu dans le récipient 18 est chassé vers la tuyère 24, augmentant ainsi la pression à la fois dans le récipient 18 et dans la tuyère 24. Ceci permet la poursuite de l'expansion du récipient. Lorsque la pression atteint la pression maximale de dégazage "BPmax", la soupape s'ouvre pour permettre au gaz de soufflage "G" de s'échapper vers l'extérieur.

Lors de cette deuxième étape "E2", le débit de liquide "L" de remplissage peut être constant ou variable en fonction de la forme qu'on désire donner à la courbe d'augmentation de pression globale.

Selon un deuxième mode de réalisation de l'invention, la section de l'orifice 34 de sortie du gaz de soufflage permet de calculer un débit maximal d'échappement du gaz de soufflage "G". Il est ainsi possible d'agir sur le débit de liquide "L" de remplissage de manière à obtenir un débit de liquide "L" de remplissage supérieur au débit maximal d'échappement.

Le niveau de liquide "L" de remplissage incompressible augmente ainsi rapidement, chassant le gaz de soufflage "G" vers l'extérieur du récipient 18 à la manière d'un piston. Le volume de liquide "L" injecté étant supérieur au volume de gaz "G" chassé par unité de temps, ceci provoque mécaniquement une augmentation de la pression dans le récipient 18.

Il est bien sûr possible de combiner les deux modes de réalisation précédemment décrit afin d'obtenir une courbe de variation de pression globale qui soit adaptée en fonction de la forme du récipient 18, à la forme de la cavité 14, à la matière formant le récipient 18, à la température du récipient 18, ou d'autres paramètres connus de l'homme du métier.

Quel que soit le mode de réalisation retenu, la conduite hydraulique 32 alimente le récipient 18 en liquide "L" de remplissage avec une pression supérieure à la pression globale à l'intérieur du récipient 18.

Lorsque le récipient 18 a atteint son deuxième état intermédiaire 18C, comme représenté à la figure 5, une troisième étape "E3" de prise d'empreinte est enclenchée.

Le bouchon 40 est alors abaissé vers sa position basse de bouchage de manière à empêcher le liquide "L" de remplissage de sortir du récipient 18, comme représenté à la figure 6. Le contenu du récipient 18 est alors formé essentiellement par du liquide "L" de remplissage, une petite poche de gaz de soufflage "G" pouvant toutefois subsister sous le bouchon 40 sans altérer la mise en oeuvre de cette troisième étape "E3".

Puis, le contenu du récipient 18 est mis sous une haute pression "HP" suffisante pour plaquer fortement les parois du récipient 18 contre l'empreinte du moule 12 afin de donner au récipient 18 sa forme finale, comme représenté à la figure 6. La haute pression "HP" est par exemple égale à 40 bars.

La pression "HP" est avantageusement commandée en augmentant la pression du liquide "L" de remplissage dans la conduite hydraulique. Le liquide "L" de remplissage étant incompressible, la montée en pression est plus rapide et plus efficace qu'avec un gaz compressible.

A l'issue de cette troisième étape "E3", le récipient 18 est dans son état final 18D. Le bouchon 40, la tige 38 et la tuyère 24 sont alors commandés respectivement vers leur position haute, comme représenté à la figure 7.

Ainsi, à l'issue du procédé de formage, le récipient 18 est alors déjà rempli de liquide "L" de remplissage lorsqu'il est ôté du moule 12.

Le procédé de formage réalisé selon les enseignements de l'invention est avantageusement court car on profite de la deuxième étape "E2" de remplissage pour poursuivre l'expansion du récipient 18.

En outre, ce gain de temps entraîne aussi un gain de qualité car le fait de ne pas arrêter l'expansion du récipient 18 pendant le remplissage du récipient 18 permet d'éviter à la matière de se figer par refroidissement.

De plus, on a constaté que l'expansion du récipient 18 en utilisant la deuxième étape "E2" de remplissage du procédé de formage selon l'invention permet de former un récipient 18 à l'état final 18D en utilisant sensiblement moins d'énergie que les procédés de formage réalisés selon l'état de la technique.

## Revendications

1. Procédé de formage d'un récipient (18) en matériau thermoplastique préalablement conditionné thermiquement depuis un état d'ébauche (18A) jusqu'à un état final (18D), le récipient (18) étant inséré dans une cavité (14) délimitée par une empreinte,
le procédé comportant :
- une première étape (E1) d'expansion partielle au cours de laquelle le récipient (18) est rempli d'un gaz de soufflage (G) sous pression (BP) de manière à souffler le récipient (18) jusqu'à un état intermédiaire (18B) entre son état d'ébauche (18A) et son état final (18D) ;
- une deuxième étape (E2) de remplissage du récipient (18) au cours de laquelle le récipient (18) est rempli avec un liquide (L) de remplissage qui chasse le gaz (G) de soufflage à travers un orifice (34) de sortie du récipient ;
- une troisième étape (E3) de prise d'empreinte au cours de laquelle le contenu du récipient (18) est mis sous une pression (HP) suffisante pour plaquer fortement les parois du récipient (18) contre l'empreinte du moule (12) afin de conformer le récipient (18) dans son état final (18D) ;
**caractérisé en ce qu'**au cours de la deuxième étape (E2) de remplissage, le rapport entre le débit entrant de liquide (L) de remplissage et le débit sortant de gaz (G) de soufflage est maîtrisé de manière que la pression globale à l'intérieur du récipient (18) soit suffisante pour permettre la poursuite de l'expansion du récipient (18) durant cette deuxième étape (E2).

2. Procédé selon la revendication 1, **caractérisé en ce que** la pression globale à l'intérieur du récipient (18) durant la deuxième étape (E2) de remplissage est constante.

3. Procédé selon la revendication 1, **caractérisé en ce que** la pression globale à l'intérieur du récipient (18) durant la deuxième étape (E2) de remplissage est variable avec le temps.

4. Procédé selon la revendication 1, **caractérisé en ce que** la pression globale à l'intérieur du récipient (18) durant la deuxième étape (E2) de remplissage est constamment croissante avec le temps.

5. Procédé selon la revendication précédente, **caractérisé en ce que** la pression globale à l'intérieur du récipient (18) durant le deuxième étape (E2) de remplissage est pilotée en agissant sur le débit de liquide (L) de remplissage entrant.

6. Procédé selon l'une quelconque des revendications 3 ou 4, **caractérisé en ce que** la pression globale à l'intérieur du récipient (18) durant la deuxième étape (E2) de remplissage est pilotée en agissant sur le débit de gaz (G) de soufflage sortant.

## Patentansprüche

1. Verfahren zum Formen eines Behälters (18) aus einem im Voraus thermisch aufbereiteten thermoplastischen Material von einem Rohzustand (18A) bis in einen Endzustand (18D), wobei der Behälter (18) in einen durch ein Nest begrenzten Hohlraum (14) eingesetzt wird,
wobei das Verfahren folgendes umfasst:
- einen ersten Schritt (E1) des teilweisen Expandierens, in dessen Verlauf der Behälter (18) mit einem mit Druck beaufschlagten (BP) Blasgas (G) gefüllt wird, derart, dass der Behälter (18) bis in einen Zwischenzustand (18B) zwischen seinem Rohzustand (18A) und seinem Endzustand (18D) aufgeblasen wird;
- einen zweiten Schritt (E2) des Befüllens des Behälters (18), in dessen Verlauf der Behälter (18) mit einer Befüllungsflüssigkeit (L) befüllt wird, die das Blasgas (G) durch eine Ausgangsöffnung (34) des Behälters treibt;
- einen dritten Schritt (E3) des Haltens des Nests, in dessen Verlauf der Inhalt des Behälters (18) mit einem ausreichenden Druck (HP) beaufschlagt wird, um die Wände des Behälters (18) stark gegen das Nest der Form (12) zu drängen, damit der Behälter (18) seinen Endzustand (18D) annimmt;
**dadurch gekennzeichnet, dass** während des zweiten Schrittes (E2) des Befüllens das Verhältnis zwischen dem Eintrittsdurchsatz der Befüllungsflüssigkeit (L) und dem Austrittsdurchsatz des Blasgases (G) in der Weise gesteuert wird, dass der Gesamtdruck in dem Behälter (18) ausreicht, um die Fortsetzung der Expansion des Behälters (18) während dieses zweiten Schrittes (E2) zu ermöglichen.

2. Verfahren nach Anspruch 1, **dadurch gekennzeichnet, dass** der Gesamtdruck in dem Behälter (18) während des zweiten Schrittes (E2) des Befüllens konstant ist.

3. Verfahren nach Anspruch 1, **dadurch gekennzeichnet, dass** der Gesamtdruck in dem Behälter (18) während des zweiten Schrittes (E2) des Befüllens zeitlich veränderlich ist.

4. Verfahren nach Anspruch 1, **dadurch gekennzeichnet, dass** der Gesamtdruck in dem Behälter (18) während des zweiten Schrittes (E2) des Befüllens mit der Zeit konstant zunimmt.

5. Verfahren nach dem vorhergehenden Anspruch, **dadurch gekennzeichnet, dass** der Gesamtdruck (18) während des zweiten Schrittes (E2) des Befüllens dadurch gesteuert wird, dass auf den Eintrittsdurchsatz der Befüllungsflüssigkeit (L) eingewirkt wird.

6. Verfahren nach einem der Ansprüche 3 oder 4, **dadurch gekennzeichnet, dass** der Gesamtdruck in dem Behälter (18) während des zweiten Schrittes (E2) des Befüllens dadurch gesteuert wird, dass auf den Durchsatz des austretenden Blasgases (G) eingewirkt wird.

## Claims

1. A process for shaping a container (18) made of preheated thermoplastic from a parison state (18A) to a final state (18D), the container (18) being inserted into a cavity (14) bounded by an impression,
the process comprising:
- a first step (E1) of partially expanding the container (18) during which it is filled with a blowing gas (G) at a pressure (BP) so as to blow the container (18) into an intermediate state (18B) between its parison state (18A) and its final state (18D);
- a second step (E2) of filling the container (18) during which the container (18) is filled with a filling liquid (L) that flushes the blowing gas (G) through an outlet orifice (34) of the container;
- a third step (E3) of shaping the container (18) during which its content is placed under sufficient pressure (HP) to press the walls of the container (18) firmly against the impression in the mold (12) in order to give the container (18) the shape it is to have in its final state (18D);
**characterized in that** during the filling second step (E2), the ratio of the flow rate of filling liquid (L) entering to the flow rate of blowing gas (G) exiting is controlled so that the overall pressure inside the container (18) is high enough to allow the expansion of the container (18) to continue during this second step (E2).

2. The process as claimed in claim 1, **characterized in that** the overall pressure inside the container (18) is constant during the filling second step (E2).

3. The process as claimed in claim 1, **characterized in that** the overall pressure inside the container (18) varies with time during the filling second step (E2).

4. The process as claimed in claim 1, **characterized in that** the overall pressure inside the container (18) continuously increases with time during the filling second step (E2).

5. The process as claimed in the preceding claim, **characterized in that** the overall pressure inside the container (18) is controlled by controlling the flow rate of filling liquid (L) entering during the filling second step (E2).

6. The process as claimed in either one of claims 3 and 4, **characterized in that** the overall pressure inside the container (18) is controlled by controlling the flow rate of blowing gas (G) exiting during the second step (E2).
